Europäisches Patentamt

European Patent Office

Office européen des brevets

(11) Veröffentlichungsnummer: **0 459 231 A2**

# (12) EUROPÄISCHE PATENTANMELDUNG

(21) Anmeldenummer: 91107896.2

(22) Anmeldetag: 16.05.91

(51) Int. Cl.5: **G06F 1/18**

(30) Priorität: 30.05.90 DE 4017312

(43) Veröffentlichungstag der Anmeldung:
04.12.91 Patentblatt 91/49

(84) Benannte Vertragsstaaten:
AT BE CH DE ES FR GB GR IT LI NL SE

(71) Anmelder: COMTECH COMPUTERTECHNIK
VERTRIEBS-GmbH
Langemarckstrasse 24
W-4300 Essen 1(DE)

(72) Erfinder: Pilgrim, Andreas
Möllhover Winkel 18
4300 Essen 11(DE)

(74) Vertreter: Zenz, Joachim Klaus, Dipl.-Ing. et al
Patentanwälte Zenz, Helber & Hosbach Am
Ruhrstein 1
W-4300 Essen 1(DE)

(54) Quaderförmiges Computer-Gehäuse.

(57) Das Gehäuse besteht aus einer Bodenwand (1), zwei Stirnwänden (2, 3), zwei Seitenwänden (4) und einer Deckelwand (5), wobei die Stirnwände fest mit der Bodenwand verbunden sind, während die Dekkelwand und die beiden Seitenwände drei gesonderte Bauteile bilden. Die Bodenwand und die Deckelwand sind mit Abkantungen (7 bzw. 8) versehen, welche von den Seitenwänden hintergriffen werden. Die Deckelwand (5) ist lösbar an den Stirnwänden (2, 3) befestigt. Das Gehäuse ist einfach in der Konstruktion und läßt sich problemlos fertigen und montieren. Dabei können wahlweise die Bodenwand und die beiden Seitenwände als Standfläche dienen. In jedem Falle ist der optische Eindruck so, als sei das Gehäuse gerade für diese Aufstellungsart gedacht.

Fig.1

Die Erfindung betrifft ein quaderförmiges Computer-Gehäuse mit einer Bodenwand, einer vorderen und einer hinteren Seitenwand, die Einschub- und Anschlußöffnungen aufweisen, ferner mit zwei Seitenwänden und einer Deckelwand, wobei die Stirnwände unlösbar mit der Bodenwand verbunden sind, während die Deckelwand und die Seitenwände abnehmbar sind.

Gebräuchliche Computer-Gehäuse dieser Art sind dazu gedacht, ausschließlich mit der Bodenwand auf der Stellfläche aufzuliegen. Meistens trägt die Bodenwand entsprechende Füße. Stellt man derartige Gehäuse auf eine der Seitenwände, so wird sofort erkennbar, daß dies nicht die vorgesehene Aufstellart ist. Die Gehäuse verlieren ihr sonst sehr ansprechendes Aussehen. Dies beeinträchtigt den Gebrauchswert, da sich die seitliche Hochkantstellung, die aus Platzgründen häufig angebracht wäre, dann verbietet, wenn eine Beeinträchtigung der ästhetischen Wirkung nicht hingenommen werden soll oder gar kann.

Der Erfindung liegt die Aufgabe zugrunde, hier Abhilfe zu schaffen und das quaderförmige Computer-Gehäuse der eingangs genannten Art so zu gestalten, daß auch eine das Aussehen nicht beeinträchtigende seitliche Hochkantstellung möglich wird, und zwar bei besonders einfacher Fertigung und Montage des Gehäuses.

Zur Lösung dieser Aufgabe ist das quaderförmige Comuter-Gehäuse erfindungsgemäß dadurch gekennzeichnet, daß die Bodenwand und die Deckelwand an jeder Seite je eine die zugehörigen Seitenkanten der beiden Stirnwände umgreifende Abkantung aufweisen, daß die Seitenwände die zugehörigen Abkantungen der Bodenwand und der Deckelwand hintergreifen und daß die Deckelwand die Stirnwände in derselben Form wie die Bodenwand übergreift und an den Stirnwänden lösbar befestigt ist.

Das erfindungsgemäße Computer-Gehäuse bildet einen Quader, bei dem unbeschadet des optischen Eindrucks wahlweise die Bodenwand, die Deckelwand oder eine der Seitenwände als Standfläche benutzt werden können. Dadurch wird die Gebrauchsfähigkeit des Gehäuses beträchtlich gesteigert.

Zurückzuführen ist dies darauf, daß die Seitenwände und die Stirnwände zur Deckelwand denselben Übergang bilden wie zur Bodenwand. Dabei weisen die Seitenwände keinerlei sichtbare Befestigungsmittel auf. Gleiches kann auch für die Bodenwand und die Deckelwand gelten. Allerdings können hier ggf. sichtbare Befestigungsmittel zugelassen werden, da erfindungsgemäß die Möglichkeit besteht, diese so zu gestalten, daß sich die Deckelwand optisch nicht von der Bodenwand unterscheidet. Optimal ist es, etwaige Befestigungsmittel an die Stirnwände zu verlegen, da letztere keine Symmetrie erfordern und im übrigen ohnehin unterschiedlich gestaltet sind.

Ein wesentliches Merkmal der Erfindung liegt - im Gegensatz zum Stande der Technik - darin, daß die beiden Seitenwände nicht einstückig mit der Deckelwand verbunden sind. Vielmehr bilden die Seitenwände vorzugsweise identisch gestaltete Einzelteile, die in die Bodenwand und die Deckelwand eingesteckt sind, wobei sich diese Steckverbindungen nach Funktion und Aussehen gleichen. Diese Konstruktion ist, was die Fertigung und die Montage anbelangt, äußerst günstig. Auch schafft sie den in der Regel angestrebten dreiseitigen Zugang zum Gehäuseinneren.

Vorzugsweise sind die hintergreifenden Abschnitte der Seitenwände zum Gehäuseinneren hin zurückgesetzt. Dies bedeutet, daß die nicht zurückgesetzten mittleren Abschnitte der Seitenwände nach außen hin vorspringen und damit die eigentliche Standfläche der Seitenwände bilden. Dabei läßt sich die Anordnung erfindungsgemäß so treffen, daß diese mittleren Abschnitte mit den Abkantungen der Boden- und Deckelwand auf gleicher Höhe liegen, so daß also diese Abkantungen mit in die Standfläche einbezogen sind.

Vorteilhafterweise übergreift der nicht zugesetzte mittlere Abschnitt jeder Seitenwand die zugehörigen Seitenkanten der Stirnwände, und zwar möglichst um dasselbe Maß, um das auch die Bodenwand und die Deckelwand die Stirnwände übergreifen. Dadurch entsteht an jeder Seite des Gehäuses eine im wesentlichen durchgehende Fläche, die lediglich zwei vorzugsweise parallele Zäsuren besitzt, und zwar entlang den Abkantungen der Boden- und der Deckelwand. Damit sind optimale Standverhältnisse gegeben, und zwar verbunden mit einem sehr ansprechenden Aussehen. Vor allen Dingen ergibt sich eine besonders einfache und stabile Konstruktion. Die Seitenwände werden nämlich einerseits zwischen den Seitenkanten der Stirnwände und andererseits zwischen den Abkantungen der Deckel- und der Bodenwand eingespannt. Die Anlage der Seitenwände an den Seitenkanten der Stirnwände kann praktisch spaltfrei erfolgen.

Ebenfalls aus konstruktiven Gründen ist es vorteilhaft, daß die hintergreifenden Abschnitte der Seitenwände zum Gehäuseinneren hin abgekantet sind. Mit diesen abgekanteten Abschnitten stützen sich die Seitenwände gegen den Boden und die Decke des Gehäuses ab.

In wesentlicher Weiterbildung der Erfindung ist das quaderförmige Computer-Gehäuse dadurch gekennzeichnet, daß eine der Stirnwände eine obere Abkantung aufweist, daß die Deckelwand auf ihrer Innenfläche mindestens eine die Abkantung untergreifende, bis zur Innenfläche dieser Stirnwand reichende Lasche trägt und daß die Deckelwand auf ihrer Innenfläche ferner mit einer die andere Stirnwand hintergreifenden Leiste versehen ist. Der herstellungstechnische Vorteil springt ins Auge, wenn man sich den Montagevorgang dieser Konstruktion vergegenwärtigt. Als erstes werden die Seitenwände in die Bodenwand eingesteckt. Anschließend wird die Deckelwand in Schrägstellung mit der die Lasche tragenden Kante auf die Seitenwände aufgesteckt und so verschoben, daß die Abkantung der einen Stirnwand in den Raum zwischen der Deckelwand und der Lasche hineinwandert. Sodann wird die Deckelwand vollends abgesenkt, wobei ihre Leiste die andere Stirnwand hintergreift.

Es hat sich gezeigt, daß die Steckverbindungen ausreichend stabil sind, um das Gehäuse zusammenzuhalten. Zusätzlich dazu ist es jedoch erfindungsgemäß auch möglich, die Leiste der Deckelwand lösbar mit der zugehörigen Stirnwand zu verbinden und auf diese Weise eine echte Verriegelung zu erzielen.

Als erfindungswesentlich offenbart gelten auch solche Kombinationen der erfindungsgemäßen Merkmale, die von den obigen Verknüpfungen abweichen.

Die Erfindung wird im folgenden anhand eines bevorzugten Ausführungsbeispiels im Zusammenhang mit der beiliegenden Zeichnung näher erläutert. Die Zeichnung zeigt in:

Fig. 1    eine perspektivische Ansicht eines erfindungsgemäßen quaderförmigen Computer-Gehäuses;

Fig. 2    in stark schematisierter Darstellung einen Schnitt entlang der Linie II - II in Fig. 1;

Fig. 3    eine Außenansicht einer Seitenwand des Gehäuses;

Fig. 4    eine Innenansicht der Deckelwand;

Fig. 5    in stark schematisierter Darstellung einen Teilschnitt entlang der Linie V - V in Fig. 1.

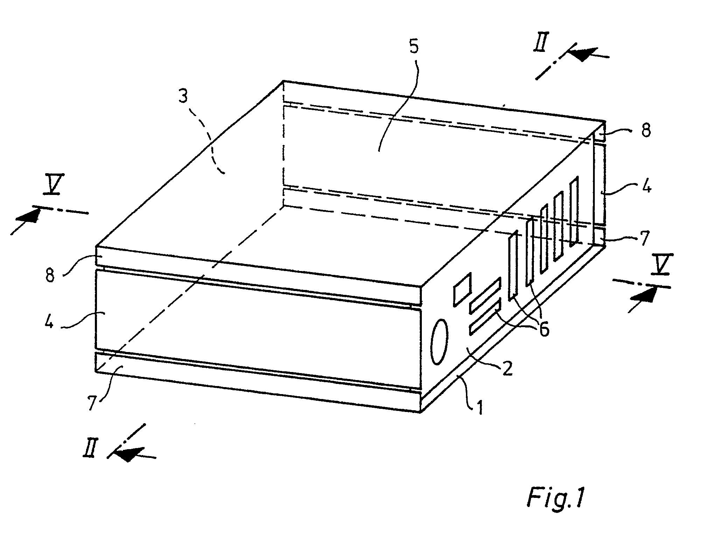

Nach Fig. 1 umfaßt das erfindungsgemäße quaderförmige Computer-Gehäuse eine Bodenwand 1, eine hintere Stirnwand 2, eine vordere Stirnwand 3, Seitenwände 4 sowie eine Deckelwand 5. Die hintere Stirnwand 2 ist mit Öffnungen 6 versehen. Entsprechende Öffnungen können auch in der vorderen Stirnwand 3 ausgebildet sein. Im übrigen sind die Stirnwände 2 und 3 fest mit der Bodenwand 1 verbunden.

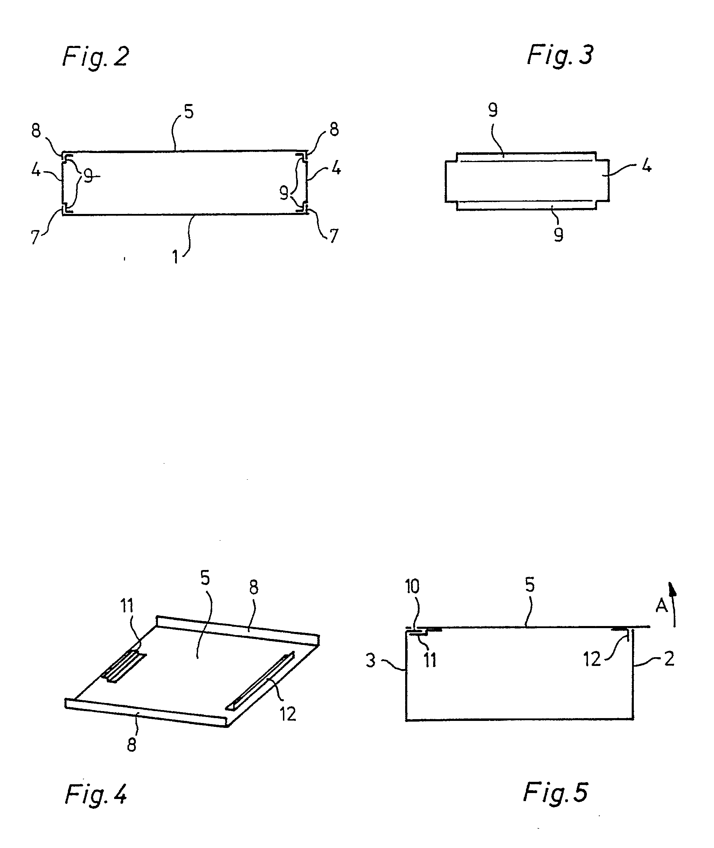

Die Seitenwände 4 und die Deckelwand 5 hingegen sind als gesonderte Bauteile ausgebildet, die mit den verbleibenden Wandelementen des Gehäuses zusammengesteckt werden können. Hierzu weist die Bodenwand 1 seitliche Abkantungen 7 auf, die die Seitenkanten der Stirnwände 2 und 3 umgreifen. Gleichermaßen ist die Deckelwand 5 mit seitlichen Abkantungen 8 versehen, die ebenfalls die Seitenkanten der Stirnwände 2 und 3 umgreifen. Die Abkantungen 7 und 8 werden ihrerseits von den Seitenwänden 4 hintergriffen, wie sich dies am besten aus der schematischen Darstelung nach Fig. 2 ergibt.

Der Zusammenhalt des Steckbausatzes wird dadurch gewährleistet, daß die Deckelwand 5 in noch zu beschreibender Weise an den Stirnwänden 2 und 3 lösbar befestigt ist. Dabei ist die Anordnung so getroffen, daß der Anschluß der Deckelwand an die Stirnwände 2 und 3 in derselben Weise erfolgt wie der Anschluß der Bodenwand 1 an die beiden Stirnwände.

Bei einfacher Konstruktion, Fertigung und Montage bietet das erfindungsgemäße Gehäuse die Möglichkeit der Aufstellung auf der Bodenwand 1 oder auf einer der Seitenwände 4, ohne daß eine dieser Aufstellungsmöglichkeiten als unsachgerecht empfunden würde.

Wie aus den Figuren 2 und 3 ersichtlich, weist jede der Seitenwände 4 Abschnitte 9 auf, die die Abkantungen 7 bzw. 8 hintergreifen und zum Gehäuseinneren hin zurückgesetzt sind. Die verbleibenden Bereiche der Seitenwände 4 bilden also, ggf. fluchtend mit den Abkantungen 7 und 8, die eigentlichen Standflächen, sofern das Gehäuse seitlich hochkant gestellt wird. Die hintergreifenden Abschnitte 9 der Seitenwände 4 sind zum Gehäuseinneren hin abgekantet und stützen sich zuverlässig auf der Bodenwand 1 bzw. der Deckelwand 5 ab.

Wie aus den Fig. 1 und 3 ersichtlich, erstrekken sich die Abschnitte 9 nicht ganz bis zu den stirnseitigen Enden der Seitenwände 4. Dies bedeutet, daß letztere die Seitenkanten der Stirnwände übergreifen. Dies hat nicht nur einen positiven ästhetischen Effekt, sondern gewährleistet auch eine sehr gute Halterung der Steckverbindungen. Die Seitenwände 4 werden nämlich einerseits zwischen den Stirnwänden 2 und 3 und andererseits zwischen der Bodenwand 1 bzw. der Deckelwand 5 eingespannt.

Die Fig. 4 und 5 zeigen eine bevorzugte Befestigung der Deckelwand 5 an den Stirnwänden 2 und 3. Demnach ist die Stirnwand 3 mit einer Abkantung 10 versehen, über die sich die Deckelwand 5 hinweg erstreckt. Letztere trägt auf ihrer Innenfläche eine Lasche 11, welche die Abkantung 10 untergreift. Gegenüber der Stirnwand 2 ist die Deckelwand 5 mit einer Leiste 12 versehen. Zur Demontage wird die Deckelwand 5 in Richtung des Pfeils A nach oben geschwenkt, so daß ihre Abkantungen 8 bis auf den der Stirnwand 3 benachbarten Bereich von den Seitenwänden 4 freikommen. Die Deckelwand 5 läßt sich sodann in Richtung der Stirnwand 2 abziehen, wobei sie sich von der Abkantung 10 der Stirnwand 3 löst. Die Montage geschieht in umgekehrter Richtung.

Sofern die Klemmverbindung nicht ausreicht, die Deckelwand 5 ausreichend sicher auf den Stirnwänden 2 und 3 zu halten, können zwischen der Stirnwand 2 und der Leiste 12 Verschraubungen o. dgl. angebracht werden.

Im Rahmen der Erfindung sind ohne weiteres Abwandlungsmöglichkeiten gegeben. So ist es nicht erforderlich, die Stirnwand 2 in Richtung des Gehäuseinneren zurückzusetzen. Auch kann auf eine Zurücksetzung der Abschnitte 9 gegenüber der Hauptfläche der Seitenwände 4 verzichtet werden. Letztere liegen dann insgesamt hinter den Abkantungen 8 und 9, wobei dann allerdings die Möglichkeit entfällt, daß die Seitenwände die Seitenkanten der Stirnwände übergreifen. Ferner kann die Anordnung nach den Fig. 4 und 5 dahingehend umgedreht werden, daß die Abkantung 10 an der Stirnwand 2 angeordnet wird, wobei dann die Montage und die Demontage in umgekehrter Richtung erfolgen.

**Patentansprüche**

1. Quaderförmiges Computer-Gehäuse mit einer Bodenwand, einer vorderen und einer hinteren Stirnwand, die Einschub- und Anschlußöffnungen aufweisen, ferner mit zwei Seitenwänden und einer Deckelwand, wobei die Stirnwände unlösbar mit der Bodenwand verbunden sind, während die Deckelwand und die Seitenwände abnehmbar sind, dadurch gekennzeichnet, daß die Bodenwand (1) und die Deckelwand (5) an jeder Seite je eine die zugehörigen Seitenkanten der beiden Stirnwände (2, 3) umgreifende Abkantung (7, 8) aufweisen, daß die Seitenwände (4) die zugehörigen Abkantungen der Bodenwand und der Deckelwand hintergreifen und daß die Deckelwand die Stirnwände in derselben Form wie die Bodenwand übergreift und an den Stirnwänden lösbar befestigt ist.

2. Computer-Gehäuse nach Anspruch 1, dadurch gekennzeichnet, daß die hintergreifenden Abschnitte (9) der Seitenwände (4) zum Gehäuseinneren hin zurückgesetzt sind.

3. Computer-Gehäuse nach Anspruch 2, dadurch gekennzeichnet, daß der nicht zurückgesetzte mittlere Abschnitt jeder Seitenwand (4) die zugehörigen Seitenkanten der Stirnwände (2, 3) übergreift.

4. Computer-Gehäuse nach einem der Ansprüche 1 bis 3, dadurch gekennzeichnet, daß die hintergreifenden Abschnitte (9) der Seitenwände (4) zum Gehäuseinneren hin abgekantet sind.

5. Computer-Gehäuse nach einem der Ansprüche 1 bis 4, dadurch gekennzeichnet, daß eine (3) der Stirnwände (2, 3) eine obere Abkantung (10) aufweist, daß die Deckelwand (5) auf ihrer Innenfläche mindestens eine die Abkantung untergreifende, bis zur Innenfläche dieser Stirnwand (3) reichende Lasche (11) trägt und daß die Deckelwand auf ihrer Innenfläche ferner mit einer die andere Stirnwand (2) hintergreifenden Leiste (12) versehen ist.

6. Computer-Gehäuse nach Anspruch 5, dadurch gekennzeichnet, daß die Leiste (12) der Deckelwand (5) mit der zugehörigen Stirnwand (2) lösbar verbunden ist.

*Fig.1*

*Fig. 2*

*Fig. 3*

*Fig. 4*

*Fig. 5*